# EUROPEAN PATENT APPLICATION

(11) **EP 2 808 703 A1**
(43) Date of publication of application: **03.12.2014**
(21) Application number: 14167032.3
(22) Date of filing: 05.05.2014
(51) Int. Cl.: G01S 19/29

(54) **Satellite receiver and method for assessing tracking loop quality of satellite receiver**

(30) Priority: 24.05.2013 CN 201310199410; 31.03.2014 US 201414230166
(71) Applicant: O2 Micro, Inc., Santa Clara, CA 95054 (US)
(72) Inventor: Gao, Ke, 610041 Chengdu (CN)
(74) Representative: Lippert, Stachow & Partner

(57) **Abstract**

A method for assessing tracking loop quality of a satellite receiver is disclosed. The method includes obtaining a carrier-to-noise power density ratio (CNO) of a tracking loop which tracks a satellite signal; generating a statistical value associated with the CNO based on output values from a discriminator of the tracking loop; and assessing a quality of the tracking loop based on the CNO and the statistical value.

## Description

### RELATED APPLICATION

The present application claims priority to Chinese Patent Application No. 201310199410.9, titled "Satellite Receiver and Method for Assessing Tracking Loop Quality of Satellite Receiver", filed on May 24, 2013 with the State Intellectual Property Office of the People's Republic of China (SIPO).

### FIELD OF THE PRESENT DISCLOSURE

The present disclosure relates generally to a satellite receiver.

### BACKGROUND

In conventional application of satellite positioning system such as Global Positioning System (GPS) or Bei Dou Navigation Satellite System (BD), after acquisition of a satellite signal, the satellite receiver enters a tracking stage. In the tracking stage, the receiver performs carrier tracking and code tracking. Accordingly, tracking loop of the receiver includes carrier tracking loop and code tracking loop. Usually, a tracking loop can include integrators, discriminators, loop filters and Numerical Controlled Oscillators (NCO).

Usually, a satellite receiver designed with conventional tracking loops can only track satellite signals having power level greater than 11 dB. During the tracking stage, various factors, including blocking from buildings, interference caused by reflected signals, interference by the signal itself, signal blocking, antenna attenuation, etc., can cause attenuation of satellite signals. If the power of a satellite signal is below 11 dB, the tracking loop will lose lock and the receiver is not able to continue tracking the satellite signal. Consequently, the process such as positioning and navigation cannot be performed by the receiver. Therefore, it is necessary to monitor and assess the quality of the tracking loop, especially, to assess if the tracking loop has lost lock. Once the tracking loop loses lock, the system of the receiver should be restarted to acquire and track the satellite signal again, in order to avoid the errors in positioning and navigation due to long-time off-lock status (i.e., lost lock status) of the tracking loop.

In conventional applications, carrier-to-noise power density ratio (CN0) is used to assess the quality of the tracking loop. CNO is defined as a ratio of the modulated carrier power to the noise power in a 1 Hz bandwidth. However, as a parameter associated with both the frequency-locked loop (FLL) and the delay-locked loop (DLL) in the carrier tracking loop, CNO is mainly used for monitoring the lock status (e.g., locked or lost) of the DLL, and can not accurately reflect the status of the FLL and the phase-locked loop (PLL) in the carrier tracking loop. In practical application, the accuracy of measuring a speed (i.e., speed calculation) is highly associated with the PLL, and the accuracy of measuring a distance (i.e., distance calculation) is highly associated with the DLL. Therefore, a conventional method which assesses tracking loop quality based solely on CNO may lead to inaccuracy in speed calculation. Furthermore, CNO cannot promptly indicate the instant lock status of the tracking loop. Because of this the receiver may restart the acquisition process long time after the tracking loop loses lock. As a result, severe errors can happen in positioning and navigation.

### SUMMARY

In an embodiment, a method for assessing tracking loop quality of a satellite receiver is disclosed. The method includes obtaining a carrier-to-noise power density ratio (CN0) of a tracking loop which tracks a satellite signal; generating a statistical value associated with the CNO based on output values from a discriminator of the tracking loop; and assessing a quality of the tracking loop based on the CNO and the statistical value.

In another embodiment, a satellite receiver is disclosed. The satellite receiver includes a CNO calculation unit, a statistical value generation unit and an assessing unit. The CNO calculation unit is configured to calculate a carrier-to-noise power density ratio (CN0) value of a tracking loop that tracks a satellite signal. The statistical value generation unit is configured to generate a statistical value based on output values from a discriminator of the tracking loop during a predetermined time period. The assessing unit is configured to assess a quality of the tracking loop based on the CNO and the statistical value.

Additional benefits and novel features will be set forth in part in the description which follows, and in part will become apparent to those skilled in the art upon examination of the following and the accompanying drawings or may be learned by production or operation of the disclosed embodiments. The benefits of the present embodiments may be realized and attained by practice or use of various aspects of the methodologies, instrumentations and combinations set forth in the detailed description set forth below.

### BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments.
FIG. 1 illustrates a flowchart of a method for assessing tracking loop quality of a satellite receiver, in accordance with an embodiment of the present disclosure;
FIGs. 2A, 2B and 2C illustrates empirical statistical graphs of standard deviations of the output values from a frequency-locked loop (FLL) discriminator of a satellite receiver during a first, a second and a third predetermined time period, respectively, in accordance with an embodiment of the present disclosure;
FIGs. 3A, 3B and 3C illustrates empirical statistical graphs of standard deviations of the output values from a phase-locked loop (PLL) discriminator of a satellite receiver during the first, the second and the third predetermined time period, respectively, in accordance with an embodiment of the present disclosure;
FIG. 4 illustrates a flowchart of a method for assessing tracking loop quality of a satellite receiver, in accordance with another embodiment of the present disclosure;
FIG. 5 illustrates a block diagram of a satellite receiver, in accordance with an embodiment of the present disclosure.

### DETAILED DESCRIPTION

Reference will now be made in detail to the embodiments of the present disclosure. While the present disclosure will be described in conjunction with these embodiments, it will be understood that they are not intended to limit the present disclosure to these embodiments. On the contrary, the present disclosure is intended to cover alternatives, modifications and equivalents, which may be included within the spirit and scope of the present disclosure as defined by the appended claims.

Furthermore, in the following detailed description of the present disclosure, numerous specific details are set forth in order to provide a thorough understanding of the present disclosure. However, it will be recognized by one of ordinary skill in the art that the present disclosure may be practiced without these specific details. In other instances, well known methods, procedures, components, and circuit have not been described in detail as not to unnecessarily obscure aspects of the present disclosure.

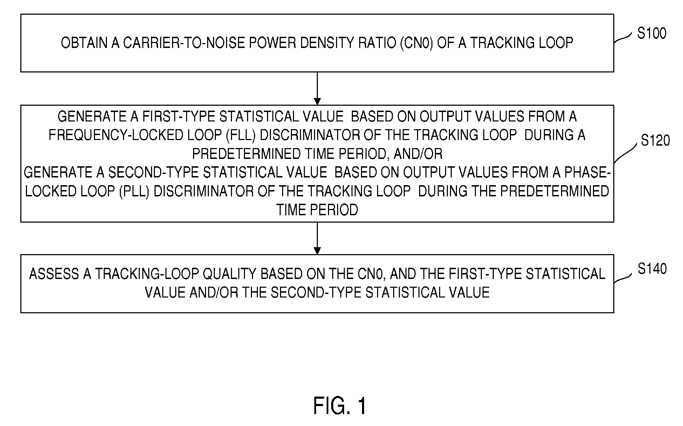

FIG. 1 illustrates a flowchart of a method for assessing tracking loop quality of a satellite receiver, in accordance with an embodiment of the present disclosure. The method includes following steps. At step S100, the carrier-to-noise power density ratio (CN0) of a tracking loop which tracks a satellite signal is obtained, e.g., by the satellite receiver. At step S120, a first-type statistical value associated with the CN0 is generated based on output values from a frequency-locked loop (FLL) discriminator of the tracking loop in the satellite receiver during a predetermined time period (e.g., 1 second, 2 second or 3 second). A second-type statistical value associated with the CN0 is generated based on output values from a phase-locked loop (PLL) discriminator of the tracking loop in the satellite receiver during the predetermined time period (e.g., 1 second, 2 second or 3 second). At step S140, the quality of the tracking loop is assessed based on the CNO, the first-type statistical value and/or the second-type statistical value. In one embodiment of the present disclosure, step S140 further includes following steps to assess the tracking loop quality. If it happens successively N times (N is an integer greater than zero, e.g., N can be 4) that the CNO of the tracking loop is greater than a first threshold and the first-type statistical value associated with the CNO value is greater than a second threshold, then the tracking loop is determined to have lost lock, and/or, if it happens successively N times that the CNO of the tracking loop is greater than a third threshold and the second-type statistical value associated with the CNO is greater than a fourth threshold, then the tracking loop is determined to have lost lock.

In an embodiment of the present disclosure, the first-type statistical value is a standard deviation of the output values from the FLL discriminator during the predetermined time period, and the second-type statistical value is a standard deviation of the output values from the PLL discriminator during the predetermined time period.

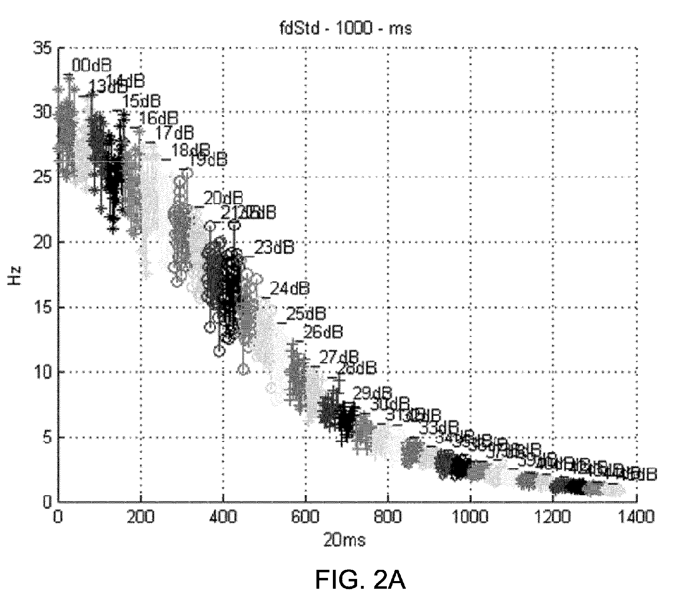

In an embodiment of the present disclosure, the first threshold is 22 dB, the second threshold is 20, the third threshold is 24 dB and the fourth threshold is 0.8. The first, second, third and fourth threshold can be empirical sampling values that are obtained through experiment, which are described in FIGs. 2A to 2C.

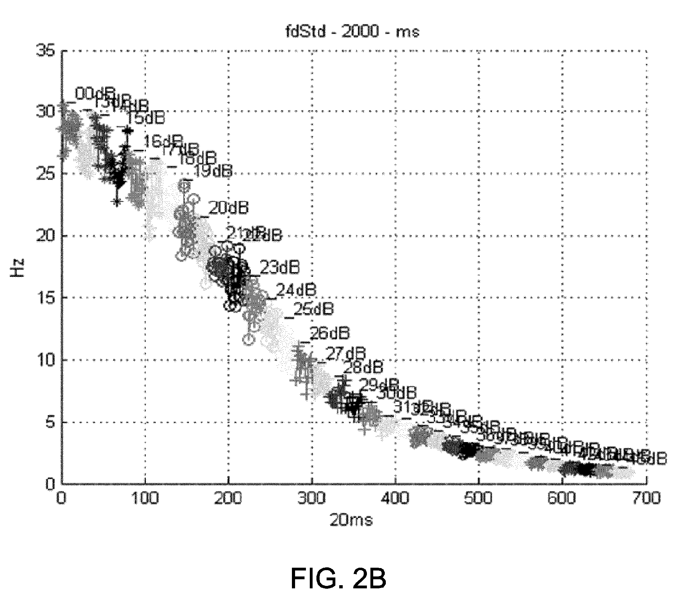

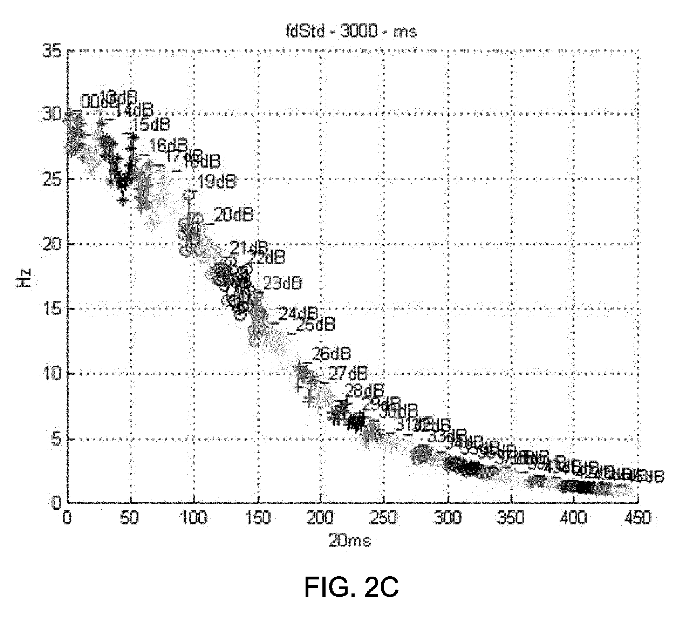

FIGs. 2A, 2B and 2C illustrates empirical statistical graphs of standard deviations of the output values from a frequency-locked loop (FLL) discriminator of a satellite receiver during a first, a second and a third predetermined time period (e.g., 1 second, 2 second, 3 second, respectively), in accordance with an embodiment of the present disclosure. FIGs. 2A, 2B and 2C are experimental results based on data obtained when the tracking loop of the satellite receiver is in a known locked status.

Take FIG. 2A as an example. The horizontal axis represents sampling time. The vertical axis represents standard deviation of the output values from the FLL discriminator during 1 second (i.e., 1000 millisecond). Each sampling value in FIG. 2A represents a standard deviation of the output values from the FLL discriminator during 1 second, associated with a specific CN0 value. Since an output value is generated by the FLL discriminator every 20 millisecond, there will be 50 output values generated during 1 second. Each sampling value is generated by calculating a standard deviation of these 50 output values. Furthermore, multiple sampling values associated with a same CN0 value constitute a cluster. The sampling values belonging to the same cluster are shown in the same gray level in the chart. For example, on the upper left of the chart, a first cluster of sampling values with abscissas near 0 and ordinates centered near 25 to 30 is associated with a CN0 value of 0 dB. A second cluster of sampling values adjacent to the first cluster of sampling values is associated with a CN0 value of 13 dB.

As can be seen from FIG. 2A, the first-type statistical values (e.g., the standard deviations of the output values from the FLL discriminator) tend to decrease while the CN0 value increases. As can be seen from FIG. 2A, if the CN0 value is greater than a first threshold (e.g., 22 dB), the first-type statistical values are less than a second threshold (e.g., 20). Therefore, the CN0 value (e.g., 22 dB) and its corresponding first-type statistical value (e.g., 20) can be stored, (e.g., in a memory of the satellite receiver) as the first threshold and the second threshold. In operation, when the satellite receiver is tracking a satellite signal and finds that an instant CN0 value is greater than the first threshold 22 dB (e.g., if CN0 is 26 dB) and calculates an instant first-type statistical value which is less than the second threshold (e.g., 20), the satellite receiver is configured to determine that the tracking loop is locked.

FIGs. 2B and 2C are similar to FIG. 2A. In the example of FIG. 2B, the vertical axis represents standard deviation of the output values from the FLL discriminator during 2 second (i.e., 2000 millisecond). Each sampling value in FIG. 2B represents a standard deviation of the output values from the FLL discriminator during 2 second, associated with a specific CN0 value. Since an output value is generated by the FLL discriminator every 20 millisecond, there will be 100 output values generated during 2 second. Each sampling value is generated by calculating a standard deviation of these 100 output values. In the example of FIG. 2C, the predetermined time period is 3 second. Each sampling value is generated by calculating a standard deviation of 150 output values.

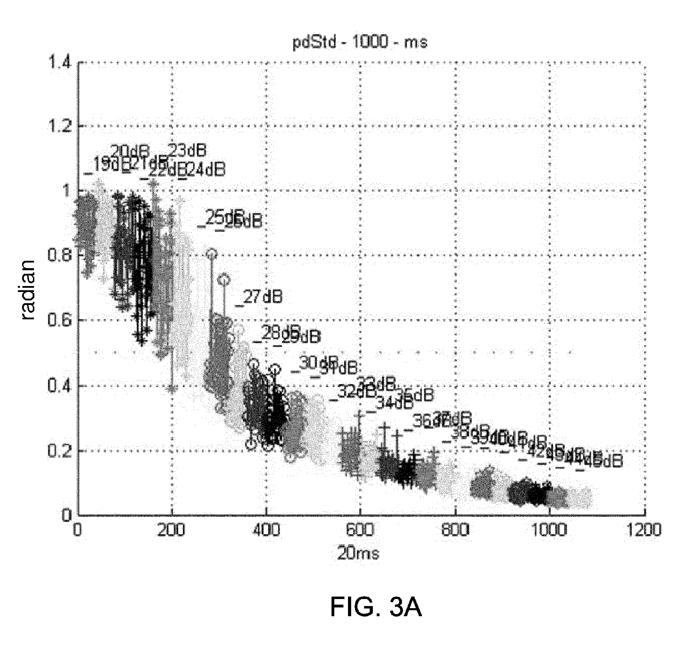

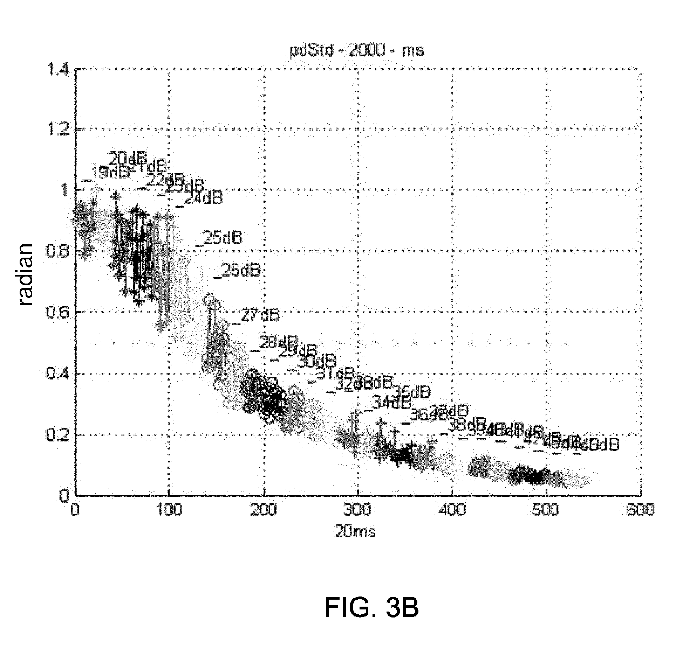

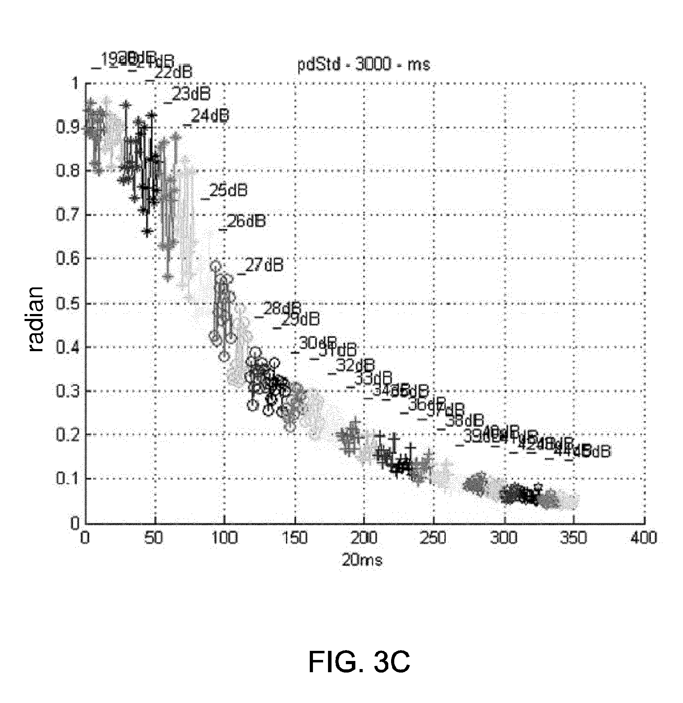

FIGs. 3A, 3B and 3C illustrates empirical statistical graphs of standard deviations of the output values from a phase-locked loop (PLL) discriminator of a satellite receiver during a first, a second and a third predetermined time period (e.g., 1 second, 2 second, 3 second, respectively), in accordance with an embodiment of the present disclosure. FIGs. 3A, 3B and 3C are experimental results based on data obtained when the tracking loop of the satellite receiver is in a known locked status.

Take FIG. 3A as an example. The horizontal axis represents sampling time. The vertical axis represents standard deviation of the output values from the PLL discriminator during 1 second (i.e., 1000 millisecond). Each sampling value in FIG. 3A represents a standard deviation of the output values from the PLL discriminator during 1 second, associated with a specific CN0 value. Since an output value is generated by the PLL discriminator every 20 millisecond, there will be 50 output values generated during 1 second. Each sampling value is generated by calculating a standard deviation of these 50 output values. Furthermore, multiple sampling values associated with a same CNO value constitute a cluster. The sampling values belonging to the same cluster are shown in the same gray level in the chart. For example, on the upper left of the chart, a first cluster of the sampling values with abscissas near 0 and ordinates centered near 0.8 to 1 is associated with a CNO value of 19 dB. A second cluster of the sampling values adjacent to the first cluster of sampling values is associated with a CNO value of 20 dB.

As can be seen from FIG. 3A, the second-type statistical values (i.e., the standard deviations of the output values from the PLL discriminator) tend to decrease while the CNO value increases. As can be seen from FIG. 3A, if the CNO value is greater than a third threshold (e.g., 24 dB), the second-type statistical values are less than the fourth threshold (e.g., 0.8). Therefore, the CNO value (e.g., 24 dB) and its corresponding first-type statistical value (e.g., 0.8) can be stored, (e.g., in a memory of the satellite receiver) as the third threshold and the fourth threshold. In operation, when the satellite receiver is tracking a satellite signal and finds that an instant CNO value is greater than the first threshold 24 dB (e.g., if CNO is 26 dB) and calculates an instant second-type statistical value which is less than the fourth threshold (e.g., 0.8), the satellite receiver is configured to determine that the tracking loop is locked.

FIGs. 3B and 3C are similar to FIG. 3A. In the example of FIG. 3B, the vertical axis represents standard deviation of the output values from the PLL discriminator during 2 second (i.e., 2000 millisecond). Each sampling value in FIG. 3B represents a standard deviation of the output values from the PLL discriminator during 2 second, associated with a specific CNO value. Since an output value is generated by the PLL discriminator every 20 millisecond, there will be 100 output values generated during 2 second. Each sampling value is generated by calculating a standard deviation of these 100 output values. In the example of FIG. 3C, the predetermined time period is 3 second. Each sampling value is generated by calculating a standard deviation of 150 output values.

Advantageously, by obtaining output values from the FLL discriminator and/or the PLL discriminator and generating statistical values based on these output values (e.g., calculating a standard deviation of the output values during a predetermined time period), the tracking loop quality can be assessed based on the statistical value and an associated CN0 value. If the tracking loop is determined to have lost lock, the satellite receiver can re-acquire the satellite signal, in order to avoid the errors in positioning and navigation.

In one embodiment of present disclosure, weighting method for multiple satellites can be adopted during positioning process. Weights of different satellite signals are determined based on the first-type statistical value and/or the second-type statistical value. The weighting method includes using the first-type statistical value and/or the second-type statistical value described above to evaluate signal quality of different satellites so as to enable a satellite receiver to select satellites with better signal quality or to use the first-type statistical value and/or the second-type statistical value as weighting parameters during positioning process or speed calculation.

More specifically, after determining that the tracking loop is locked, the satellite receiver can utilize the first-type statistical value generated based on the output values from the FLL discriminator to determine a weight of a corresponding satellite signal during speed calculation. For example, if the first-type statistical value of a satellite is relatively small, it indicates that the signal quality of this satellite is relatively good, and therefore signal from this satellite can be given more weight during speed calculation. In contrast, if the first-type statistical value of a satellite is relatively big, it indicates that the signal quality of this satellite is relatively poor, and therefore signal from this satellite can be given less weight during speed calculation.

On the other hand, after determining that the tracking loop is locked, the satellite receiver can utilize the second-type statistical value generated based on the output values from the PLL discriminator to determine a weight of a corresponding satellite signal during distance calculation. For example, if the second-type statistical value of a satellite is relatively small, it indicates that the signal quality of this satellite is relatively good, and therefore signal from this satellite can be given weight during distance calculation. In contrast, if the second-type statistical value of a satellite is relatively big, it indicates that the signal quality of this satellite is relatively poor, and therefore signal from this satellite can be given less weight during distance calculation.

In summary, according to present disclosure, a satellite signal can be weighted during positioning process (e.g., speed calculation and/or distance calculation) by the satellite receiver based on statistical values which are generated according to the output values from the FLL discriminator and /or the PLL discriminator.

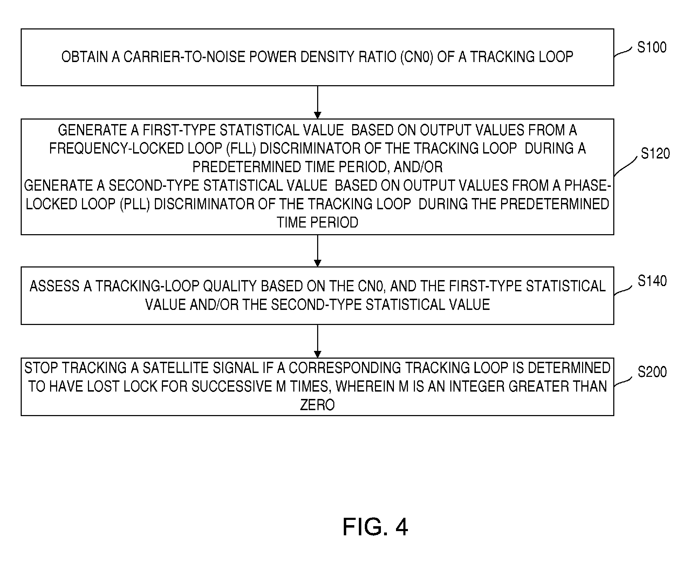

FIG. 4 illustrates a flowchart of a method for assessing tracking loop quality of a satellite receiver, in accordance with another embodiment of the present disclosure. Steps labeled the same as in FIG. 1 have similar functions. Comparing with the flowchart in FIG. 1, the flowchart in FIG. 4 further includes a step S200 after the step S140. In step S200, if the satellite receiver determines successively M times (M is an integer greater than 0, e.g., M can be 3) that a tracking loop has lost lock according to the method disclosed above, then this tracking loop is disabled promptly and the satellite receiver stops tracking a satellite signal corresponding to this tracking loop. Advantageously, by disabling the tracking loop promptly, the efficiency and accuracy of positioning can be improved.

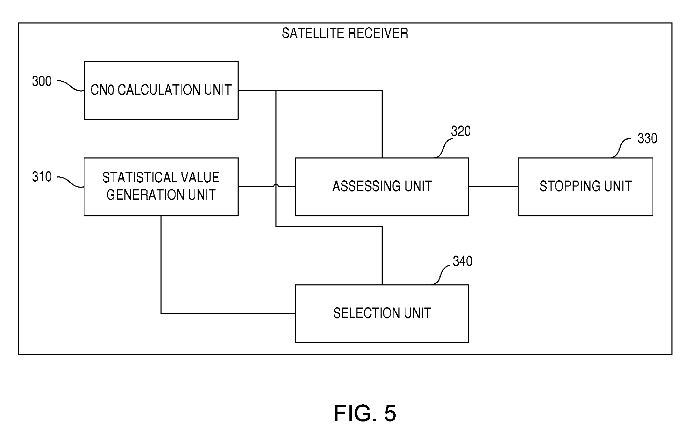

FIG. 5 illustrates a block diagram of a satellite receiver, in accordance with an embodiment of the present disclosure. The satellite receiver includes a CNO calculation unit 300, a statistical value generation unit 310, and an assessing unit 320. The CNO calculation unit 300 is configured to calculate a CNO of a tracking loop that tracks a satellite signal. The statistical value generation unit 310 is configured to generate the first-type statistical value and/or the second-type statistical value based on output values from the FLL discriminator and/or the PLL discriminator during a predetermined time period. The assessing unit 320 is coupled to the CNO calculation unit 300 and the statistical value generation unit 310, and is configured to assess a quality of the tracking loop based on the CNO and the first-type statistical value and/or the second-type statistical value.

In one embodiment of the present disclosure, the assessing unit 320 further includes a first judging unit and a second judging unit (not shown in FIG. 5). The first judging unit is coupled to the CNO calculation unit 300 and the statistical value generation unit 310, and is configured to determine that the tracking loop has lost lock if it happens successively N times (N is an integer greater than zero, e.g., N can be 4) that the CNO is greater than a first threshold and the first-type statistical value is greater than a second threshold. The second judging unit is coupled to the CNO calculation unit 300 and the statistical value generation unit 310, and is configured to determine that the tracking loop has lost lock if it happens successively N times (N is an integer greater than zero, e.g., N can be 4) that the CNO is greater than a third threshold and the second-type statistical value is greater than a fourth threshold.

In one embodiment of the present disclosure, the satellite receiver further includes a stopping unit 330 coupled to the assessing unit 320 and is configured to stop the satellite receiver from tracking a corresponding satellite if it happened successively M times (M is an integer greater than 0, e.g., M can be 3) that the assessing unit 320 determines a tracking loop has lost lock.

In one embodiment of the present disclosure, the first-type statistical value is a standard deviation of the output values from the FLL discriminator during the predetermined time period while the second-type statistical value is a standard deviation of the output values from the PLL discriminator during the predetermined time period.

In an embodiment of the present disclosure, the first threshold is 22 dB, the second threshold is 20, the third threshold is 24 dB, and the fourth threshold is 0.8.

In one embodiment of the present disclosure, the satellite receiver in FIG. 5 further includes a selection unit 340 coupled to the CNO calculation unit 300 and the statistical value generation unit 310. The selection unit 340 is configured to assess signal quality of different satellites based on the first-type statistical value and/or the second-type statistical value. The signal quality of different satellites can be considered during selection of satellites by the satellite receiver, or can be used as weighting parameters during positioning process or speed calculation by the satellite receiver.

As described above, the statistical value generation unit 310 generates the first-type statistical value and/or the second-type statistical value based on real-time output values from the FLL discriminator and/or the PLL discriminator, and the assessing unit 320 assesses the quality of the tracking loop based on the CNO value, which is calculated by the CNO calculation unit 300, along with the first-type statistical value and/or the second-type statistical value. Advantageously, the tracking loop quality can be assessed promptly. As a result, the satellite receiver can promptly re-acquire and track the satellite signal if the tracking loop has lost lock. Therefore, errors in positioning and navigation can be decreased.

Moreover, the stopping unit 330 can disable a tracking loop and stop the satellite receiver from tracking a corresponding satellite if it happened successively M times (M is an integer greater than 0, e.g., M can be 3) that the assessing unit 320 determines a tracking loop has lost lock. Advantageously, by disabling the tracking loop promptly, the efficiency and accuracy of positioning can be improved. The selection unit 340 can assess signal quality of different satellites based on the first-type statistical value and the second-type statistical value. The signal quality of different satellites can be considered during selection of satellites by the satellite receiver, or can be used as weighting parameters during speed calculation by the satellite receiver. For example, in one embodiment, the satellites with poor signal quality will not be used by the satellite receiver in positioning process, while the satellites with good signal quality can weigh more during positioning process.

The method and apparatus according to present disclosure are suitable to both dual-mode satellite receivers and single-mode satellite receivers, and suitable to GPS satellite receivers, BD satellite receivers, Glonass satellite receivers as well as Galileo satellite receivers.

While the foregoing description and drawings represent embodiments of the present disclosure, it will be understood that various additions, modifications and substitutions may be made therein without departing from the spirit and scope of the principles of the present disclosure as defined in the accompanying claims. One skilled in the art will appreciate that the disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the disclosure being indicated by the appended claims and their legal equivalents, and not limited to the foregoing description.

## Claims

1. A method for assessing tracking loop quality of a satellite receiver, comprising:
obtaining a carrier-to-noise power density ratio (CN0) of a tracking loop which tracks a satellite signal;
generating a statistical value associated with the CNO based on output values from a discriminator of the tracking loop; and
assessing a quality of the tracking loop based on the CNO and the statistical value.

2. The method of claim 1, wherein the discriminator of the tracking loop comprises one or more of frequency-locked loop (FLL) discriminator and phase-locked loop (PLL) discriminator.

3. The method of claim 1 or 2, wherein assessing a quality of the tracking loop comprises:
determining that the tracking loop has lost lock if it happens successively N times that the CNO of the tracking loop has a value greater than a first threshold and the statistical value associated with the CNO is greater than a corresponding threshold, wherein N is an integer greater than zero.

4. The method of claim 1, 2 or 3, further comprising:
stopping tracking the satellite signal if it is determined successively M times that the tracking loop has lost lock, wherein M is an integer greater than zero.

5. The method of one of claims 1 to 4, wherein the statistical value comprises a standard deviation of the output values from the discriminator during the predetermined time period.

6. The method of claim 3, 4 or 5, wherein the first threshold is 22 dB or 24 dB, a threshold for the statistical value associated with CNO based on FLL discriminator is 20, and a threshold for the statistical value associated with CNO based on PLL discriminator is 0.8.

7. The method of one of claims 1 to 6, further comprising:
determining weight of different satellite signals during positioning process based on the statistical value.

8. A satellite receiver, comprising:
a CNO calculation unit, configured to calculate a carrier-to-noise power density ratio (CN0) of a tracking loop that tracks a satellite signal;
a statistical value generation unit, configured to generate a statistical value based on output values from a discriminator of the tracking loop during a predetermined time period; and
an assessing unit, configured to assess a quality of the tracking loop based on the CNO and the statistical value.

9. The satellite receiver of claim 8, wherein the discriminator of the tracking loop comprises one or more of FLL discriminator and PLL discriminator.

10. The satellite receiver of claim 8 or 9, wherein the assessing unit comprises:
a judging unit configured to determine that the tracking loop has lost lock if it happens successively N times that the CNO is greater than a first threshold and the statistical value is greater than a corresponding threshold, wherein N is an integer greater than zero.

11. The satellite receiver of claim 8, 9 or 10, further comprising:
a stopping unit configured to stop the satellite receiver from tracking the satellite signal if it happened successively M times that the assessing unit determines that the tracking loop has lost lock, wherein M is an integer greater than zero.

12. The satellite receiver of one of claims 8 to 11, wherein the statistical value is a standard deviation of the output values from the discriminator during the predetermined time period.

13. The satellite receiver of one of claims 9 to 12, wherein the first threshold is 22 dB or 24 dB, a threshold for the statistical value associated with CNO based on FLL discriminator is 20, and a threshold for the statistical value associated with CNO based on PLL discriminator is 0.8.

14. The satellite receiver of one of claims 8 to 13, further comprising:
a selection unit configured to determine weight of different satellite signals during positioning process based on the statistical value.
